# EUROPÄISCHE PATENTANMELDUNG

(11) **EP 1 277 971 A1**
(43) Veröffentlichungstag der Anmeldung: **22.01.2003**
(21) Anmeldenummer: 02014613.0
(22) Anmeldetag: 02.07.2002
(51) Int. Cl.: F16B 13/06, F16B 13/08

(54) **Unverlierbarer Spreizanker**

(30) Priorität: 14.07.2001 DE 10134375
(71) Anmelder: Horst Filipp GmbH, 32130 Enger-Oldinghausen (DE)
(72) Erfinder: Filipp, Horst, 32130 Enger (DE)
(74) Vertreter: Dantz, Jan Henning

(57) **Zusammenfassung**

Eine Verbindungseinrichtung, mit einer Spreizhülse (1), die über einen Teilbereich sich axial erstreckende Schlitze (10) aufweist, und einem Spreizkonus (3), der im Bereich der Schlitze (10) in die Spreizhülse (1) eingeführt ist, ist so ausgebildet, daß der Spreizkonus (3) vor einer Montage der Verbindungseinrichtung mit der Spreizhülse (1) form- oder kraftschlüssig verbunden ist.

## Beschreibung

Die vorliegende Erfindung betrifft eine Verbindungseinrichtung gemäß dem Oberbegriff des Anspruchs 1.

Derartige Verbindungseinrichtungen finden in vielen Anwendungsbereichen Verwendung.

So dienen sie beispielsweise dazu, Beschlagteile, wie Tür- oder Fenstergriffe an Hohlkammerprofilen zu befestigen.

Dabei wird zur Befestigung in den Spreizkonus eine Schraube eingedreht, durch die der Spreizkonus in die Spreizhülse unter gleichzeitiger Aufspreizung der durch die Schlitze gebildeten Laschen eingezogen wird.
Durch die Aufspreizung der Laschen erfolgt eine feste Verbindung der Spreizhülse mit dem Befestigungsteil einerseits und über die Schraube mit dem anzuschließenden Teil andererseits.

Allerdings ergeben sich Probleme bei der Montage der Verbindungseinrichtung dadurch, daß der Spreizkonus gegenüber der Spreizhülse lediglich auf der Schraube gehalten wird, also insoweit verlierbar ist.

Dies erschwert nicht nur die Montage, sondern kann auch zum Verlust der Spreizhülse und des Spreizkonus für den Fall führen, daß die Verbindung einmal gelöst werden muß. In diesem Fall fallen die genannten Teile in die Hohlkammer, von wo sie zumindest nicht einfach zu entnehmen sind, in den überwiegenden Fällen gar nicht.

Der vorliegenden Erfindung liegt daher die Aufgabe zugrunde, eine Verbindungseinrichtung der gattungsgemäßen Art so auszubilden, daß ihre Handhabung insgesamt, insbesondere jedoch die Montage, vereinfacht und eine Weiterverwendung problemlos möglich ist.

Diese Aufgabe wird durch eine Verbindungseinrichtung gelöst, die die Merkmale des Anspruchs 1 aufweist.

Durch die unverlierbare Halterung des Spreizkonus in der Spreizhülse kann nun diese Vebindungseinrichtung problemlos in eine dafür vorgesehene Bohrung des Befestigungsteiles eingesetzt werden. Dabei liegt nach einer bevorzugten Ausführungsform der Vebindungseinrichtung der dem Spreizkonus gegenüberliegende Endbereich der Spreizhülse mantelseitig an der Lochlaibung an. wobei nach einer vorteilhaften Weiterbildung der Erfindung dieser Bereich der Spreizhülse mit einer Rändelung oder einer ähnlichen Aufrauhung versehen ist, durch die die Spreizhülse form- und/oder kraftschlüssig an dem Befestigungsteil verdrehsicher gehalten wird.

Der Formschluß zwischen dem Spreizkonus und der Spreizhülse kann beispielsweise aus einem Bündchen bestehen, das einen Teil des zylindrischen Ansatzes bildet und das auf der einem konischen Endbereich des Spreizkonus gegenüberliegenden Seite vorgesehen ist und das eine Hinterschneidung der Spreizhülse hintergreift, wodurch eine einseitige axiale Verschiebesicherung vor einer Montage der Verbindungseinrichtung gegeben ist.
Beim Einziehen des Spreizkonus in die Spreizhülse durch Drehen der Schraube unter der erwähnten Aufspreizung der Laschen wird dieser Ansatz bis in den Bereich der Spreizhülse geführt, in der diese an der Lochlaibung des Befestigungsteiles anliegt.

Zur Erzielung einer kraftschlüssigen Verbindung zwischen dem Spreizkonus und der Spreizhülse ist vorgesehen, daß der Außendurchmesser des zylindrischen Ansatzes des Spreizkonus und der lichte Durchmesser der Spreizhülse, zumindest im gemeinsamen Anlagebereich, als Preßsitz ausgebildet sind. Hierdurch wird gewährleistet, daß vor einem Einbau der Verbindungseinrichtung die Spreizhülse und der Spreizkonus unverlierbar miteinander verbunden sind.
Dabei wird zweckmäßigerweise, insbesondere da es sich bei solchenVerbindungseinrichtungen um Massenartikel handelt, der Spreizkonus maschinell in die Spreizhülse eingepreßt.

In diesem Sinn kann auch das Bündchen dimensioniert sein, wodurch ebenfalls ein Reibschluß erreicht wird, durch den beim Eindrehen einer Schraube in den Spreizkonus dessen Mitdrehen verhindert wird.

Weiter wird der hierbei gerändelte Bereich der Spreizhülse durch das Bündchen in die Laibung der Bohrung gepreßt, so daß die Spreizhülse, aber auch der Spreizkonus nach einem Entfernen der Schraube fest in dem Befestigungsteil gehalten werden. Hierdurch kann nachfolgend erneut eine Schraube eingedreht werden, ohne daß die Lage und Wirkung der Verbindungseinrichtung sich verändert.

Dies führt naturgemäß zu einer wesentlichen Vereinfachung der Montage, aber auch zu einer Verbesserung der Wirtschaftlichkeit, da nun auf den Einsatz einer neuen Verbindungseinrichtung verzichtet werden kann.

Nach einer vorteilhaften Weiterbildung der Erfindung ist vorgesehen, daß die Spreizhülse auf ihrer dem Spreizkonus gegenüberliegenden Stirnseite bzw. der Spreizkonus auf seiner der Spreizhülse gegenüberliegenden Stirnseite einen sehr flach gehaltenen Kragen aufweist, der geringfügig größer ist als die Bohrung des Befestigungsteiles. Dieser Kragen bildet beim Einsetzen der Verbindungseinrichtung einen Anschlag und damit eine Montagehilfe, da sich der Kragen in Endstellung an der Oberfläche des Befestigungsteiles abstützt.

Das Bündchen des Spreizkonus ist in seinem Außendurchmesser nur geringfügig größer als der lichte Durchmesser des die Hinterschneidung bildenden Bereiches der Spreizhülse, so daß bei der Vormontage zum Einpressen des Spreizkonus die Laschen der Spreizhülse nur geringfügig aufgeweitet werden. Die innewohnenden Elastizitätskräfte der Laschen sorgen nach dem Einpressen des Spreizkonus für eine Rückstellung in ihre ursprüngliche Lage.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teillängsschnitt durch eine Verbindungseinrichtung in Nichtgebrauchsstellung gemäß der Linie I-I in Figur 3,
- Figur 2: die Verbindungseinrichtung in Gebrauchsstellung, ebenfalls in einem Teillängsschnitt,
- Figur 3: einen Querschnitt durch die Verbindungseinrichtung gemäß der Linie III-III in Figur 1.
- Figur 4: ein weiteres Ausführungsbeispiel einer Verbindungseinrichtung vor einem Einbau in einem Teillängsschnitt,
- Figur 5: die Verbindungseinrichtung nach Figur 4 in montierter Stellung, ebenfalls in einem Teillängsschnitt.

In den Figuren ist eine Verbindungseinrichtung dargestellt, die eine Spreizhülsel und einen Spreizkonus 3 aufweist.

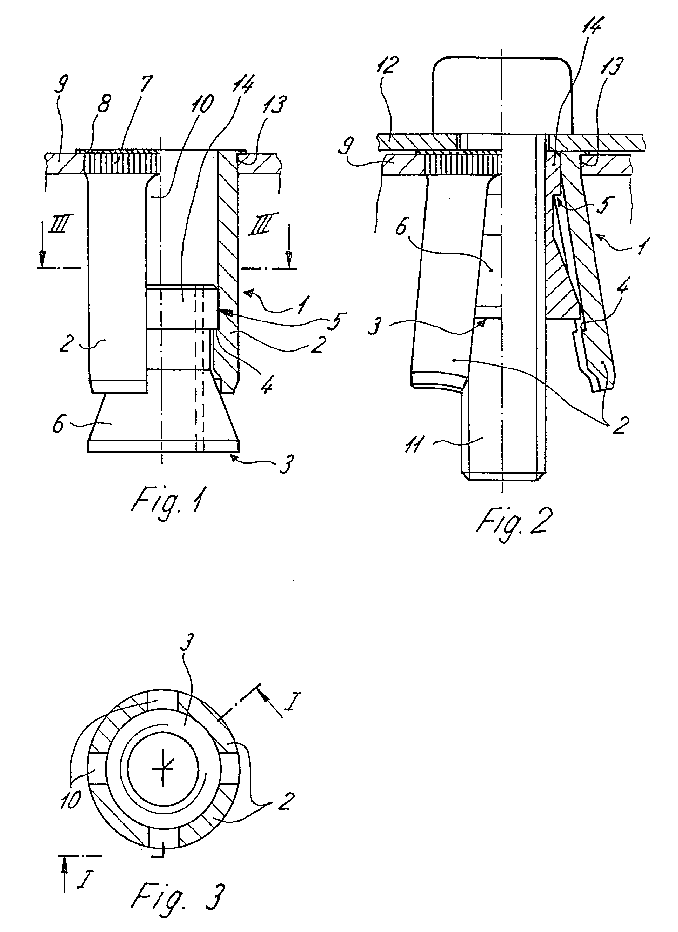

Ausgehend von einem Ende sind in der Spreizhülse 1 mehrere, sich in Längsachsrichtung erstreckende Schlitze 10 vorgesehen, durch die Laschen 2 gebildet werden, die in Gebrauchsstellung der Verbindungseinrichtung, wie sie in der Figur 2 dargestellt ist, durch den Spreizkonus 3 aufgespreizt sind.

Bei dem in den Figuren 1 bis 3 dargestellten Ausführungsbeispiel ist hierzu in den Spreizkonus 3 eine Schraube 11 eingedreht, wobei der Spreizkonus 3 selbstverständlich ein Innengewinde aufweist.

Wie die Figur 1 sehr deutlich zeigt, weist der Spreizkonus 3 auf seiner einem Konusteil 6 gegenüberliegenden Endseite einen zylindrischen Ansatz 5 mit einem Bündchen 14 auf, das eine Hinterschneidung 4 der Spreizhülse 5 hintergreift, die durch einen gegenüber der Innenbohrung der Spreizhülse 2 im übrigen kleineren lichten Durchmesser gebildet ist. Diese Hinterschneidung 4 ist in dem dem Spreizkonus 3 zugewandten Endbereich vorgesehen.

Das Bündchen 14 ist in seinem Außendurchmesser so dimensioniert, daß es zusammen mit der zugeordneten Innenbohrung der Spreizhülse 1 einen Preßsitz ergibt.

Auf seiner dem Spreizkonus 3 gegenüberliegenden Stirnseite weist die Spreizhülse 1 einen Kragen 8 auf, mit dem die Spreizhülse 1 an einem Befestigungsteil 9 anliegt. Der sich anschließende zylindrische Bereich der Spreizhülse 1 ist umlaufend mit einer Rändelung 7 versehen, die an der Laibung einer Bohrung 13 anliegt, durch die die Verbindungseinrichtung gesteckt ist. Zweckmäßigerweise sind der Durchmesser der Bohrung 13 und der Außendurchmesser der Spreizhülse 1 so aufeinander abgestimmt, daß sich ein Reibschluß ergibt.

In der Figur 2 ist ein Anschlußteil 12 mit dem Befestigungsteil 9 verbunden. Hier ist zu erkennen, daß der Spreizkonus 3 durch die Schraube 11 bis in eine äußere Endstellung gezogen ist, in der das Bündchen 14 bereichsweise in Deckung kommt mit der Rändelung 7.

Durch das Konusteil 6 des Spreizkonus 3 sind die Laschen 2 so weit aufgespreizt, daß eine axiale Verschiebung der Spreizhülse 1 ausgeschlossen ist, wodurch eine sichere Verbindung des Anschlußteiles 12 am Befestigungsteil 9 entsteht.

Durch die maßliche Abstimmung des Bündchens 14 mit dem zugeordneten lichten Durchmesser der Spreizhülse 1, durch die, wie erwähnt, ein Preßsitz gegeben ist, wird der Spreizkonus 3 verdrehsicher in der Spreizhülse 1 gehalten. Zusätzlich sorgt das Bündchen 14 beim Anziehen des Spreizkonus 3 für ein Andrücken des mit der Rändelung 7 versehenen Bereiches an die Laibung der Bohrung 13.

Die entsprechend der Figur 2 eingenommene Position der Spreizhülse 1 und des Spreizkonus 3 bleiben auch dann unverändert, wenn die Schraube 11 herausgeschraubt und durch eine neue ersetzt wird. Dies schafft die Möglichkeit, das Anschlußteil 12 bei Bedarf problemlos zu lösen, ohne daß erneut eine Verbindungseinrichtung eingesetzt werden muß.

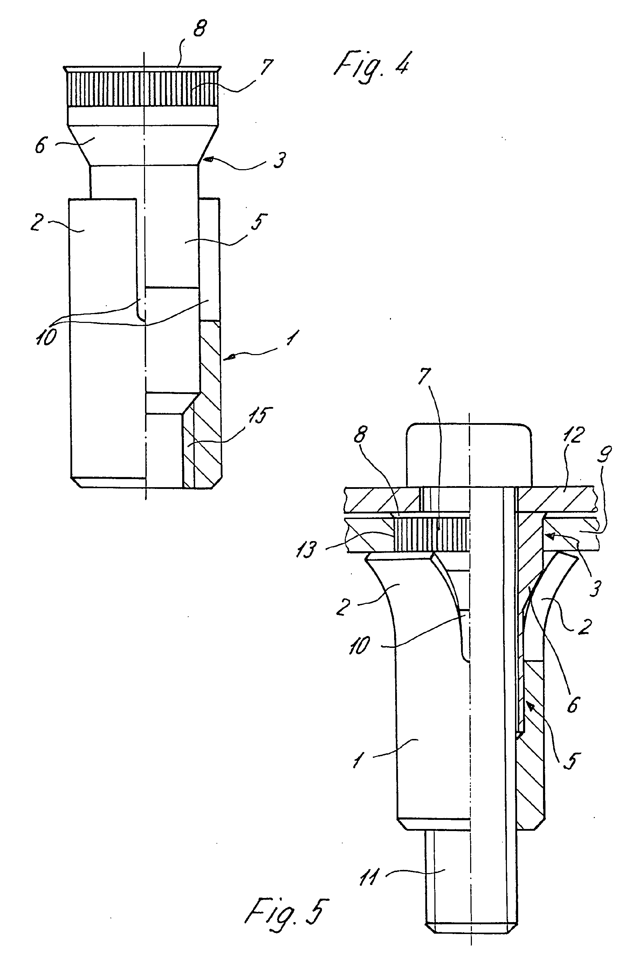

Bei dem in den Figuren 4 und 5 gezeigten Ausführungsbeispiel einer Verbindungseinrichtung ist der zylindrische Ansatz 5 des Spreizkonus 3, der sich glattschaftig vom einen Ende bis zum Konusteil 6 erstreckt, in die Innenbohrung der Spreizhülse 1 eingepreßt.

An diese Innenbohrung schließt sich ein Innengewinde 15 an, in das eine Schraube 11 eindrehbar ist, durch die bei der Montage der Verbindungseinrichtung die Spreizhülse 1 in Richtung des Befestigungsteiles 9 gezogen wird, und zwar unter Aufspreizung der Laschen 2, die am Konusteil 6 des in das Befestigungsteil 9 eingesteckten Spreizkonus 3 anliegen.

In Endstellung, wie sie in der Figur 5 gezeigt ist, stützen sich die Laschen mit ihren Stirnkanten an dem Befestigungsteil 9 ab, während der zylindrische Ansatz 5 bis in einen Bereich der Spreizhülse 1 hineinragt, der außerhalb der Schlitze 10 liegt, so daß in diesem Bereich die reibschlüssige Verbindung zwischen dem Spreizkonus 3 und der Spreizhülse 1 bestehen bleibt.

Auch bei einem Herausdrehen der Schraube 11 ist die Spreizhülse 1 fest mit dem Spreizkonus 3 verbunden. Durch die Rändelung 7 an dem dem zylindrischen Ansastz 5 gegenüberliegenden Endbereich ist ein Formschluß zwischen dem Befestigungsteil 9 und dem Spreitkonus 1 geschaffen, durch den bei dem genannten Herausdrehen der Schraube 11 die Verbindungseinrichtung insgesamt in ihrer ursprünglichen Position verharrt und für eine erneute Benutzung uneingeschränkt einsetzbar ist.

### Bezugszeichenliste

- 1: Spreizhülse
- 2: Lasche
- 3: Spreizkonus
- 4: Hinterschneidung
- 5: Ansatz
- 6: Konusteil
- 7: Rändelung
- 8: Kragen
- 9: Befestigungsteil
- 10: Schlitz
- 11: Schraube
- 12: Anschlußteil
- 13: Bohrung

## Patentansprüche

1. Verbindungseinrichtung, mit einer Spreizhülse (1), die über einen Teilbereich sich axial erstreckende Schlitze (10) aufweist, und einem Spreizkonus (3), der im Bereich der Schlitze (10) in die Spreizhülse (11) eingeführt ist und vor einer Montage der Verbindungseinrichtung mit der Spreizhülse (1) form- oder kraftschlüssig verbunden ist, **dadurch gekennzeichnet, daß** der Spreizkonus (3) einen zylindrischen Ansatz (5) aufweist, dessen Durchmesser mindestens bereichsweise und der lichte Durchmesser der zugerordneten Innenbohrung der Spreizhülse (1) so ausgebildet sind, daß sie einen Preßsitz ergeben.

2. Verbindungseinrichtung nach Anspruch 1, **dadurch gekennzeichnet, daß** der Ansatz (5) teilweise als Bündchen (14) ausgebildet ist, das eine Hinterschneidung (4) der Spreizhülse (1) hintergreift.

3. Verbindungseinrichtung nach Anspruch 1 oder 2, **dadurch gekennzeichnet, daß** der Durchmesser des Bündchens (14) und der lichte Durchmesser der zugeordneten Innenbohrung der Spreizhülse (1) so ausgebildet sind, daß sie einen Preßsitz ergeben.

4. Verbindungseinrichtung nach Anspruch 1, **dadurch gekennzeichnet, daß** der dem Spreizkonus (3) gegenüberliegende zylindrische Endbereich der Spreizhülse (1) oder der der Spreizhülse (1) abgewandte Endbereich des Spreizkonus (3) mit einer Rändelung (7) versehen ist.

5. Verbindungseinrichtung nach Anspruch 1, **dadurch gekennzeichnet, daß** die dem Spreizkonus (3) gegenüberliegende Stirnseite der Spreizhülse (1) oder die der Spreizhülse (1) abgewandte Stirnseite des Spreizkonus (3) mit einem umlaufenden Kragen (8) versehen ist.

6. Verbindungseinrichtung nach Anspruch 4, **dadurch gekennzeichnet, daß** der Außendurchmesser der Spreizhülse (1) im Bereich der Rändelung (7) und der Durchmesser einer Bohrung (13) eines Befestigungsteiles (9), in das die Verbindungseinrichtung einsteckbar ist, so dimensioniert sind, daß sich ein Preßsitz ergibt.

7. Verbindungseinrichtung nach Anspruch 5, **dadurch gekennzeichnet, daß** der Kragen (8) auf seiner freien Stirnseite mit einer Rändelung versehen ist.

8. Verbindungseinrichtung nach Anspruch 1, **dadurch gekennzeichnet, daß** die Länge des zylindrischen Ansatzes (5) größer ist als die Länge der Schlitze (10).

9. Verbindungseinrichtung nach Anspruch 2, **dadurch gekennzeichnet, daß** der Außendurchmesser des Bündchens (14) geringfügig größer als der kleinste lichte Durchmesser der die Hinterschneidung (4) bildenden Bohrung.
